Europäisches Patentamt

European Patent Office

Office européen des brevets

(11) Publication number: **0 279 625**
**A2**

# EUROPEAN PATENT APPLICATION

(21) Application number: 88301269.2

(22) Date of filing: 16.02.88

(51) Int. Cl.4: **H 04 N 7/00**
**H 04 N 7/06**

(30) Priority: 16.02.87 GB 8703554

(43) Date of publication of application:
24.08.88 Bulletin 88/34

(84) Designated Contracting States:
AT BE CH DE ES FR GB GR IT LI LU NL SE

(71) Applicant: BRITISH BROADCASTING CORPORATION
Broadcasting House
London W1A 1AA (GB)

(72) Inventor: Moffat, Matthew Ernest Bruce, Dr.
6, Hillside Close
Southgate Crawley Sussex RH11 8PQ (GB)

Black, Robert Irvine
Oakley Tudor Avenue
Hampton, Middlesex TW12 2ND (GB)

Sandbank, Charles Peter
Wintergold Beech Road
Reigate Surrey RH2 9NA (GB)

(74) Representative: Abnett, Richard Charles et al
REDDIE & GROSE 16 Theobalds Road
London WC1X 8PL (GB)

(54) Signal transmission system.

(57) A broadcast television signal (TV) with a sound subcarrier in a selected 8 MHz uhf transmission channel carries additional information in its adjacent channel for e.g. improving picture quality. The additional information is at a relatively low amplitude level and is preferably in digital form. The additional information provides relatively little interference due to existing network planning constraints but is readily received by a specially adapted receiver. Preferably the additional information is transmitted in low energy slots in the adjacent channel in order to reduce interference effects. It is also preferably at a lower level than picture transmission in that adjacent channel.

FIG.4

EP 0 279 625 A2

## Description

### SIGNAL TRANSMISSION SYSTEM

This invention relates to a signal transmission system of the type comprising a plurality of transmitters and a greater plurality of receivers, and in particular to a broadcast television system and to transmitters and receivers for use in the system.

Conventional television broadcasting in the United Kingdom now uses the uhf band, the relevant part of which is divided into 44 channels. The channels are numbered 21 to 34 and 39 to 68, channels 35 to 38 being used for other purposes. Each channel is 8 MHz wide and the channels are contiguous - the frequencies used are in the ranges 470 to 582 MHz and 614 to 854 MHz.

The 8 MHz channel width is already quite intensively used, but there is a desire to increase the information transmitted. We have appreciated that it would be desirable to transmit in association with each broadcast television signal an additional information signal. This signal could, for example, comprise a signal carrying additional information designed to enable a sophisticated receiver to reproduce a picture of improved quality, or to enable a special receiver to produce a signal of wider aspect ratio than the conventional 4 : 3. Alternatively the signal could comprise additional digital sound signals.

The additional information must be carried in such a way that it does not cause interference with existing conventional receivers receiving the same basic signal, and equally must not cause interference with receivers tuned to other nearby channels.

We had initially proposed the use of a dedicated channel, say channel 68, for carrying this additional information signal. However, this is difficult to implement because the additional signals associated with different transmissions would interfere with each other. Furthermore, the capacity of the band as a whole is reduced by one channel; it is already difficult enough to find channels for new transmitters that are not subject to interference.

The present invention is defined in the appended claims to which reference should now be made.

In accordance with this invention, we propose transmitting an additional information signal associated with a uhf broadcast television transmission in a channel adjacent to the channel in which the television signal is transmitted.

In a preferred system employing a plurality of transmitters the additional information signal is always transmitted in the adjacent channel above the associated conventional television transmission. For channels 34 and 68 two possibilities exist, namely either the additional signals are allowed into channels 35 and 69 respectively, or alternatively in these particular cases only the adjacent channel below is used, namely channels 33 and 67 respectively.

A receiver designed to use the additional information includes additional circuitry which is for receiving the additional information in the appropriate adjacent channel and to process it in relation to the associated television transmission to improve the picture or sound as appropriate. As the additional information is transmitted on a frequency close to the main transmission the existing antenna and tuning circuitry of basically conventional type will have a perfectly adequate response to receive the additional signal. Furthermore, the system has the great advantage that the receiver "knows where to look" for the additional signal regardless of the channel to which it is tuned.

A conventional receiver will simply ignore the additional signal and be unaffected by it. An important advantage of using the adjacent channel is that existing broadcast planning techniques already take account of adjacent channel interference, so that two nearby adjacent channel transmitters do not mutually interface. Thus the new additional signal is unlikely to introduce interference in receivers tuned to the channels of nearby adjacent-channel transmitters. This is particularly so as the additional signal is preferably transmitted at relatively low power, namely at least 10 dB and preferably about 20 dB down relative to the associated television transmission.

The invention will now be described in more detail by way of example with reference to the accompanying drawings, in which:

Figure 1 is a block diagram of the relevant parts of a transmitter embodying the invention;

Figure 2 is a block diagram of the relevant parts of a receiver embodying the invention;

Figure 3 illustrates part of the uhf frequency spectrum;

Figure 4 illustrates the spectrum of a signal in channel 21 in accordance with this invention;

Figure 5 illustrates the input arrangement where the additional information is digital information;

Figure 6 illustrates a suggested distribution of the additional information in the adjacent channel;

Figure 7 illustrates a possible arrangement where all the transmitted information is digital information; and

Figure 8 illustrates an alternative arrangement for the transmitter of Figure 1.

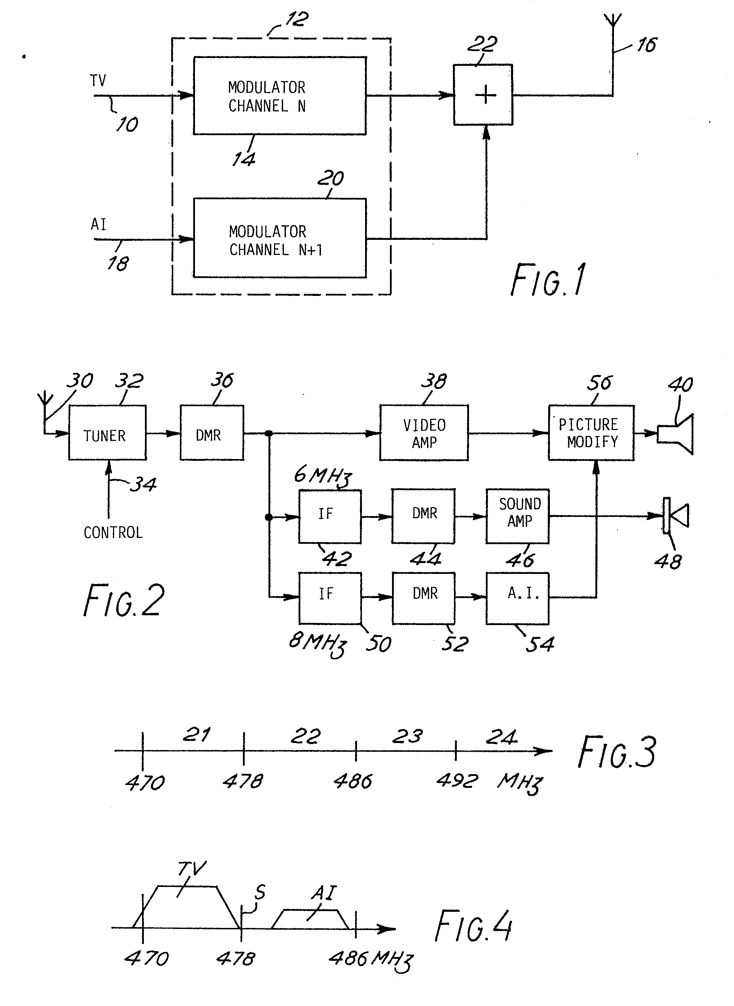

Figure 1 serves to illustrate the modifications required at a transmitter in accordance with this invention. The transmitter is part of a broadcast television system comprising a plurality of transmitters spaced over a terrestial region and a greater plurality of receivers. A conventional encoded television signal which may be in PAL, NTSC or SECAM format, is received at an input 10 and applied to a modulating unit 12 comprising a modulator 14 which modulates the signal onto a selected channel N. The signal is applied to a transmitting antenna 16.

In accordance with this invention an additional information (AI) signal is received at an input 18 and applied to a second modulator 20 within the modulating unit 12. An adder 22 then adds the outputs of the two modulators 14,20 before application to the antenna 16.

In an alternative arrangement as shown in Figure 8, the modulator 20 could be replaced by an 8 MHz modulator 24 which modulates the AI signal onto a 8 MHz subcarrier which would be suppressed. The modulated subcarrier would then be applied to the input of the channel-N modulator 14. Such an arrangement would generate additional signals in both the adjacent channels. The output of the channel-N modulator 14 would therefore be applied to a filter 28 to remove the signal in either the channel above or below the main transmision channel. An 8MHz modulator is used for PAL transmissions, but in other transmission standards different bandwiths would be used.

In the receiver of Figure 2 an antenna 30 is connected to a conventional "front-end" tuner 32 which is adjustable by a user control 34 to select the desired transmitted channel. A demodulator 36 then reduces this signal to baseband, thus leaving the additional information as though modulated on an 8 MHz subcarrier. The demodulator output is applied to video processing and amplifier circuitry 38 and thus to a CRT display 40. The demodulator output also contains the sound signal on a 6 MHz subcarrier and the additional information signal on an 8 MHz subcarrier. In an alternative arrangement the demodulator may have a separate output for the additional information and this may also contain the sound signal both on their respective subcarriers.

The sound signal is amplified in an IF amplifier 42, demodulated in a demodulator 44, and applied to a sound amplifier 46 and thence to a loudspeaker 48. The additional information signal is similarly amplified in an IF amplifier 50, demodulated in a demodulator 52, and applied to additional information processing circuitry 54. The type of processing which takes place in the circuitry 54 will be dependent on the type of additional data transmitted. For example, it could be high quality digital sound data, or digital assistance data to enhance picture quality. Other possibilities exist. Assuming that the additional information is designed to increase the quality of the displayed picture, the output of the circuitry 54 is applied to a picture modification circuit 56 in the video signal path.

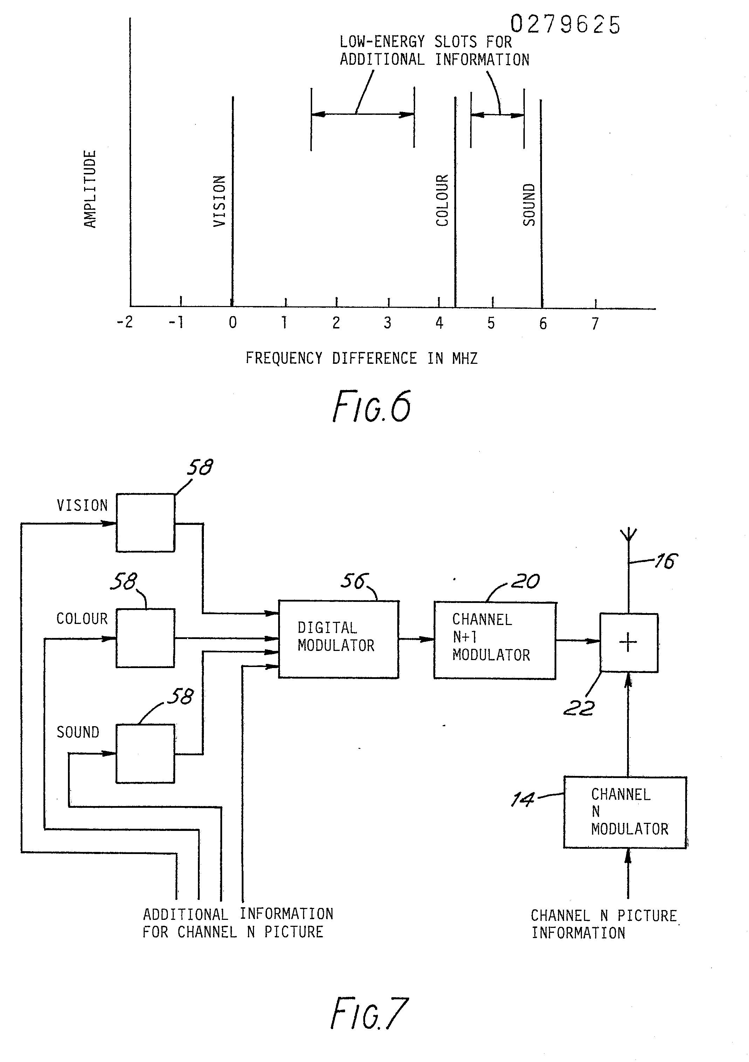

Figure 3 illustrates the part of the frequency spectrum containing the first few uhf TV channels. It will be seen that the channels are 8 MHz wide and are contiguous. In Figure 4 is shown in very diagrammatic form the spectrum of a conventional television signal in channel 21, showing the sound sub-carrier S. In accordance with this invention additional information AI is transmitted in the next channel above, namely channel 22. The additional signal is preferably in digital form and can be modulated by any convenient modulation technique. The precise position of the additional information in channel 22 is chosen to minimise any possible interference with signals in that channel from other transmitters. The position chosen is therefore where the energy content of the signal in channel 22 is lowest. The exact position in the adjacent channel is to be determined experimentally. However, it is likely that the additional data will occupy one or more low energy level slots in the adjacent channel. These low energy slots will probably fall between the subcarriers of a television signal in the adjacent channel. An example of an 8MHz bandwith PAL transmission channel as is used in the U.K. is shown in Figure 6. There are three subcarriers for the signal transmitting vision, colour, and sound information respectively. The centre frequency of the colour subcarrier is 4.3MHz aboves that of the vision subcarrier and the centre frequency of the sound subcarrier is 1.7MHz above that of the colour subcarrier.

The first low energy slot would preferably be within the range of 1MHz above the vision subcarrier to 1MHz below the colour subcarrier. A narrower band than this 2MHz may be desirable. The second low energy slot would preferably be within the range 0.3MHz above the colour subcarrier to 0.3MHz below the sound carrier. It may be possible to insert more data in slots above and below the sound and vision subcarriers respectively.

When more than one low energy slot is used it will be possible to transmit parallel data streams which would be available simultaneously at a receiver.

To reduce interference the signal AI is at least 10 dB and preferably of the order of 20 dB down on the main television signal.

Existing network planning constraints require that care is taken to avoid adjacent channel interference so the low level signal in the adjacent channel is unlikely to cause problems.

In this way it is possible to provide compatible improved quality television within the uhf spectrum without a change of the 625 line standard, and without any need to replace the existing frequency allocations to the transmitters. By transmitting information associated with each existing PAL 625-line transmission on channel N within the 8 MHz of the adjacent channel N + 1, the additional signal will be within the bandwidth of existing transmitting and receiving antennas. The maximum bit rate to be transmitted would be decided as an empirical compromise between "ruggedness" and "compatibility", but a bit rate in the region of 700 kbit/s to 1 Mbit/s may be feasible. The selected bandwidth for the additional information will be chosen to give a balance between data capacity and natural interference.

Any practical terrestial network comprises a plurality of transmitter stations the majority of which are transponder or relay transmitters. Each station typically transmits four different television channels. This invention can be employed in such a complex system without appreciable difficulty.

The additional information can serve a variety of desired purposes. For example, it could comprise a high quality digital stereo sound signal, or other sound signals such as different languages. Particularly interesting is the possibility of using the additional information to improve the quality of the displayed image.

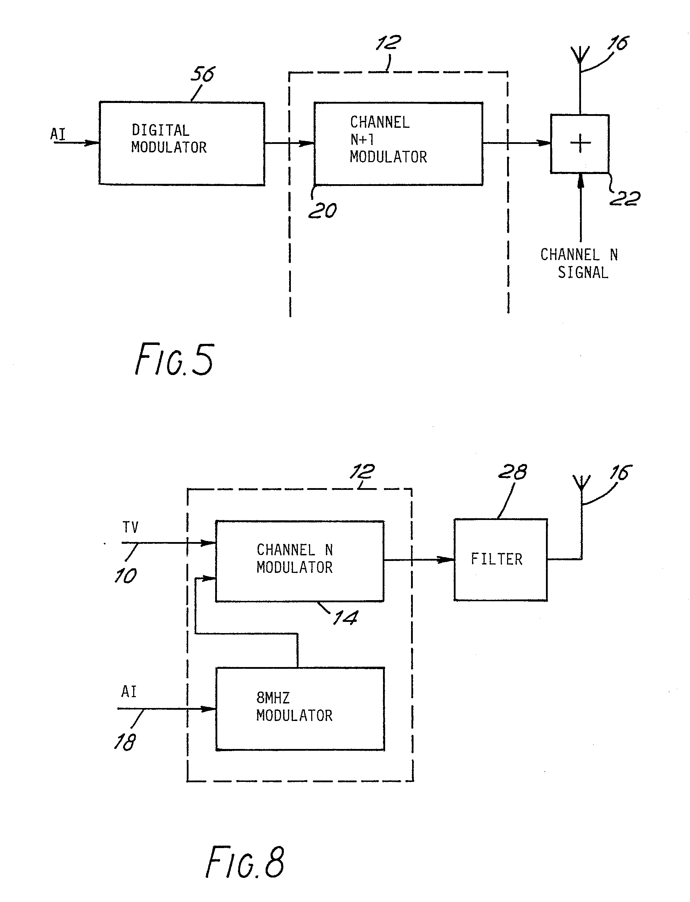

Where the additional data is digital information, it is first modulated by a digital modulator 56 shown in Figure 5. It then goes to the channel N + 1 modulator 20 of the modulator unit 12 before being combined with the channel N data in the combiner 22. The transmission of digital assistance data, as additional information for image enhancement, in vertical blanking intervals has been proposed in our British Patent Application No. 8716634. This same information could be transmitted by the method proposed in the current application. The type of additional information could be block based movement information indicating for many small picture portions whether that portion contained movement or not. The data comprises a plurality of bits or multi-bit words each representing picture-dependent information such as whether movement has occurred in a related respective part of the picture being transmitted. That is, the picture is notionally divided into blocks of say 5 to 20 lines high and 5 to 20 pixels wide, the blocks preferably being diamond shaped. At the transmitter a determination is made in relation to each block as to whether it contains moving information or essentially stationary information. If moving, it may be possible to code that it is moving with one of one or more predetermined movement vectors (amplitude/direction combination).

The sizes of the individual picture areas will be a matter for choice depending on the capacity of the additional data channel within the adjacent channel but there will normally be well in excess of 1000 such areas in one picture.

The information can be used at the receiver significantly to improve the quality of the displayed picture. An example will be considered.

The information can be used to reduce cross-colour and cross-luminance effects. This is achieved by using picture-delay decoding in stationary areas of the picture and switching to line-delay decoding in moving areas. Thus stationary areas of the picture have a full 5.5MHz un-notched resolution but the resolution of moving areas would fall to around 3.5MHz (typical of present-day receivers). Where movement with one of the defined movement vectors is assumed to have taken place, the picture can be treated as though stationary but with due allowance made for the movement vector in comparing the two fields. The full definition of the vectors can also be transmitted. The picture could be divided into a number of large regions and different vectors used for the different regions, nine such regions might be used on a 3 by 3 array. Further details on a block based motion detection system may be found in our British Patent Application Serial No. 2,188,510.

Alternatively, the additional information transmitted could be used to enable the receiver to up-convert to a higher line and/or field standard than the conventional 625/50 line standard.

A suggested arrangement for a fully digital transmission is shown in Figure 7. This comprises three A/D converters 58 receiving additional vision, colour and sound data to be transmitted in channel N + 1. The outputs of these and an additional digital information signal from channel N are modulated onto respective subcarriers in a digital modulator 56. The output of the digital modulator is then the input of the channel N + 1 modulator 20. This is combined with the channel N signal in a combiner 22 before being transmitted.

Another possibility is for the additional information to comprise image data enabling a specially-constructed receiver to display a wide aspect ratio picture at say 5:3 or 16:9 aspect ratio instead of the usual 4:3. The signal may also carry an indication of which is the important part of the wide aspect ratio picture to enable a receiver with a 4:3 display to "pan" to a desired part of the wide aspect ratio signal now transmitted.

The additional information may comprise information of more than one of these and other types.

The proposed system may also be used on television systems which employ channel widths other than 8 MHz, and on cable systems of the type which do not normally carry adjacent channel signals.

**Claims**

1. A television signal transmission system comprising a plurality of transmitters and a greater plurality of receivers, the transmitters each operating on respective selected ones of a plurality of adjacent frequency channels such that the receivers can receive the transmitted television signals without substantially objectional cross-interference, in which the transmitters are adapted in relation to at least some of the transmitted signals to transmit additional information associated with the respective transmitted television signals, characterised in that the additional information is transmitted in each case on a channel adjacent to the channel on which the television signal with which it is associated is transmitted.

2. A transmitter for use in the system of claim 1, having a first input (10) for receiving a television signal to be transmitted, a second input (18) for receiving an additional information signal associated with the received television signal, and modulating means (12) connected to the inputs (10,18) for modulating the television signal onto a first selected frequency channel and for modulating the additional information signal onto a second frequency channel characterised in that the additional information is in digital form and in that the second frequency channel is adjacent to the first frequency channel.

3. A receiver for use in the system of claim 1, comprising controllable tuning means (32) for tuning to a selected frequency channel to provide at an output a signal corresponding to the signal received in the selected channel, processing means (38) for decoding the signal from the tuning means (32), and display means connected to the processing means for displaying a television picture, characterised in that the tuning means provides an additional information signal from a channel which is adjacent to the said selected channel, and by the receiver including further processing means for processing additional information received on the said adjacent channel in relation to the signal processed by the first processing means.

4. Apparatus according to claim 3 characterised in that the tuning means includes a second output for providing the signal from the adjacent channel to the said selected channel.

5. Apparatus according to any preceding claim characterised in that the additional signal is transmitted in at least one low energy slot within the adjacent channel.

6. Apparatus according to claim 5, characterised in that any slot within the adjacent channel is located between subcarriers of an adjacent main television signal.

7. Apparatus according to any preceding claim, characterised in that the additional signal is transmitted on the adjacent channel above the channel on which the television signal with which it is associated is transmitted.

8. Apparatus according to claim 6, modified in that in the case of channels at the top end of a band of channels the additional signal is transmitted on the adjacent channel below the channel on which the television signal with which it is associated is transmitted.

9. Apparatus according to any preceding claim, characterised in that the additional information is transmitted at a substantially lower level than the associated television signal.

10. Apparatus according to any preceding claim, characterised in that the additional information is transmitted at a level at least 10 dB below the level of the associated television signal.

11. Apparatus according to any preceding claim, characterised in that the additional information comprises at least one sound signal.

12. A broadcast television signal in one uhf frequecy channel provided with an associated additional information signal in a uhf frequency channel adjacent to the channel on which the television signal is transmitted.

13. A method for transmitting television signals comprising the steps of:

transmitting a plurality of television signals on a plurality of adjacent frequency channels: and

further transmitting one or more additional information signals associated with one or more selected ones of said television signals, characterised in that each additional information signal is transmitted on a channel adjacent to the channel in which the associated television signal is transmitted.

FIG.1

FIG.2

FIG.3

FIG.4

0279625

AI → DIGITAL MODULATOR *56*

CHANNEL N+1 MODULATOR *20*

*12*

+ *22*

↑ *16*

CHANNEL N SIGNAL

## FIG.5

TV *10* → CHANNEL N MODULATOR *14*

AI *18* → 8MHZ MODULATOR

*12*

FILTER *28*

↑ *16*

## FIG.8

0279625

LOW-ENERGY SLOTS FOR
ADDITIONAL INFORMATION

AMPLITUDE

VISION

COLOUR

SOUND

-2   -1   0   1   2   3   4   5   6   7

FREQUENCY DIFFERENCE IN MHZ

## FIG.6

VISION → 58

COLOUR → 58

SOUND → 58

56 DIGITAL MODULATOR

20 CHANNEL N+1 MODULATOR

16

22 +

14 CHANNEL N MODULATOR

ADDITIONAL INFORMATION
FOR CHANNEL N PICTURE

CHANNEL N PICTURE
INFORMATION

## FIG.7